# EUROPEAN PATENT APPLICATION

(11) **EP 1 482 686 A2**
(43) Date of publication of application: **01.12.2004**
(21) Application number: 04012805.0
(22) Date of filing: 28.05.2004
(51) Int. Cl.: H04L 12/56, H04L 12/28

(54) **Extending the mobility of a wireless headset by using access points of a wireless local area network (WLAN)**

(30) Priority: 28.05.2003 US 473967 P
(71) Applicant: Broadcom Corporation, Irvine, California 92618-7013 (US)
(72) Inventor: Seshadri, Nambirajan, 92612 Irvine (US); Bennett, James D., 918 Ave Presidio San Clemente, CA (US)
(74) Representative: Jehle, Volker Armin, Dipl.-Ing.

(57) **Abstract**

Providing of a universal wireless headset (12) begins for an incoming call by determining whether a piconet can be established between an initiating device (device C) and the wireless headset (12). If a piconet cannot be established, the processing continues by determining whether the wireless headset (12) can establish a piconet with a device coupled to a network (access point H, device E). The network may be a local area network, which includes wireless devices and/or wired devices. When the wireless headset (12) can establish the piconet with a device coupled to the network (access point H, device E), the piconet is established. Once the piconet is established, the processing continues by establishing a logical connection between the initiating device (device C) and the device coupled to the network (access point H, device E). As such, the incoming communication is supported via the logical connection and the piconet. Outgoing communications are carried out accordingly.

## Description

### BACKGROUND OF THE INVENTION

### TECHNICAL FIELD OF THE INVENTION

This invention relates generally to wireless communications and more particularly to wireless communications via a headset.

### DESCRIPTION OF RELATED ART

As is known, the Bluetooth specification provides a platform for establishing a personal wireless point-to-point network that supports data and/or voice communications. Depending on the version of Bluetooth being implemented, data may be conveyed at 1 megabits-per-second (Mbps), 2 Mbps, 5.5 Mbps, or 11 Mbps. The Bluetooth specification also provides a headset profile that defines protocols and procedures for establishing a wireless headset for operation in conjunction with a device (e.g., cellular telephone, personal computer, laptop). When wirelessly coupled, the headset acts as the device's audio input and output. The wireless communications between the headset and the device may be secured in accordance with an authentication procedure and/or encryption as specified by the Bluetooth standard.

While the Bluetooth headset profile provides for basic wireless headset operations, it also provides some restrictions. The restrictions include that the headset is assumed to be the only use case active between the two devices, audio data is transmitted as monophonic, only one audio connection at a time is supported between the headset and the device, and multiple calls at the device are not supported.

In addition to these restrictions, the headset is operationally tied to one device, thus the mobility of the device and the range of the wireless coupling limit movement of the user while engaged in a communication. Accordingly, if the headset is outside the range of the wireless coupling, it cannot function as the headset for the device.

Therefore, a need exists for a method and apparatus of providing a universal headset that extends the mobility of the user, extends the range of headset use, and expands headset functionality.

### BRIEF SUMMARY OF THE INVENTION

The providing of a universal wireless headset of the present invention substantially meets these needs and others. In one embodiment, a universal wireless headset is supported by determining, for an incoming communication, whether a piconet can be established between an initiating device and the wireless headset. The incoming communication may be voice data for a telephone communication (i.e., playback audio data, etc.). If a piconet cannot be established, the processing continues by determining whether the headset can establish a piconet with a device coupled to a network. The network may be a local area network, which includes wireless devices and/or wired devices. For instance, the network may support wireless LANs (local area networks) in accordance with IEEE802.11 (a), (b) or (g) and/or support Ethernet connections. When the wireless headset can establish the piconet with a device coupled to the network, the piconet is established. Once the piconet is established, the processing continues by establishing a logical connection between the initiating device and the device coupled to the network. As such, the incoming communication is supported via the logical connection and the piconet. With such a universal wireless headset, mobility of its user is extended, the range of use is extended as well as functionality.

In another embodiment, a universal wireless headset is supported for outgoing communications by having the headset transmit a request to establish a piconet with one of a plurality of its host devices. A host device may be a cellular telephone, wire line telephone, personal computer, laptop, personal digital assistant (PDA), access point into a wireless LAN, et cetera. If none of the host device provides a response to the request for a piconet, the headset transmits a request to establish a piconet with a device coupled to the network. In other words, if the headset is outside of the coverage area of one of its host devices, it communicates with a device within its coverage area. The process then continues by establishing a logical connection between one of the host devices and the device coupled to the network to support the outgoing communication. Such a process provides a universal wireless headset that extends the mobility of the user, extends the range of the headset and expands the headset functionality.

In yet another embodiment, a method for supporting a universal wireless headset for ongoing communications begins by monitoring signal strength of communications within a piconet that includes the headset and a device coupled to the network. The device coupled to the network may be one of the host devices of the headset or any other device in the network. If the signal strength compares unfavorably with a threshold (e.g., signal strength is below an acceptable signal strength level of, approximately -80dB or -85 dB), another device coupled to the network is identified. Once the other device is identified, a piconet is established between the device and the headset. In addition, a logical connection may be established between the new device and a host device supporting the communication. Accordingly, a universal wireless headset is provided that extends the mobility of the user, extends the range of the headset and expands on its functionality.

According to an aspect of the invention, a method for supporting a universal wireless headset comprises:
determining whether a piconet can be established between an initiating device and the universal wireless headset for an incoming communication;
when the piconet cannot be established, determining whether the universal wireless headset can establish a piconet with a device coupled to a network;
when the universal wireless headset can establish the piconet with the device coupled to a network, establishing the piconet between the universal wireless headset and the device coupled to the network; and
establishing a logical connection between the initiating device and the device coupled to the network via the network, wherein the incoming communication between the universal wireless headset is supported via the logical connection and the piconet between the universal wireless headset and the device coupled to the network.

Advantageously, the determining whether a piconet can be established between an initiating device and the universal wireless headset further comprises:
providing, by the initiating device, a request to establish the piconet to the universal wireless headset;
determining, by the initiating device, whether a response to the request is received within a timeout period; and
when the response is not received within the timeout period, providing, by the initiating device, an indication that the piconet cannot be established to an administrative controller of the network.

Advantageously, the method further comprises:
when the response is received within the timeout period, establishing the piconet.

Advantageously, the determining whether the universal wireless headset can establish a piconet with the device coupled to the network further comprises:
identifying, by an administrative controller of the network, the universal wireless headset based on identity of the initiating device; and
determining, by the administrative controller, location of the universal wireless headset with respect to the network.

Advantageously, the determining the location of the universal wireless headset further comprises:
accessing a table to determine the location.

Advantageously, the method further comprises:
periodically establishing a piconet with devices in range of the universal wireless headset;
providing, by each of the devices in the periodically created piconet, an indication of the piconet to the administrative controller; and
storing, by the administrative controller, in the table identity of the each of the devices in the periodically created piconet to indicate the location of the universal wireless device.

Advantageously, the determining whether the universal wireless headset can establish a piconet with a device coupled to a network further comprises:
providing, by an administrative controller of the network, a message instructing the device coupled to the network to function as a master for establishing the piconet with the universal wireless headset;
providing, by the device coupled to the network, a request to the universal wireless headset;
when a response is received within a timeout period from the universal wireless headset, providing, by the device coupled to the network, a message indicating that the piconet can be established.

Advantageously, the establishing the piconet between the universal wireless headset and the device coupled to the network further comprises:
establishing the piconet in accordance with the request and the response.

According to another aspect of the invention, a method for supporting a universal wireless headset comprises:
transmitting, by the universal wireless headset, a request to establish a piconet to one of a plurality of host devices;
when none of the plurality of host devices provides a response to the request within a timeout period, transmitting, by the universal wireless headset a request to establish a piconet to one of a plurality of devices coupled to a network;
when at least one of the plurality of devices coupled to the network provides the response within the timeout period, establishing the piconet between the universal wireless headset and the at least one of the plurality of devices; and
establishing a logical connection between the one of the plurality of host devices and the at least one of the plurality of devices to support an outgoing communication from the universal wireless headset via the logical connection and the one of the plurality of host devices.

Advantageously, the method further comprises:
when one of the plurality of host devices provides a response to the request within a timeout period, establishing the piconet between the universal wireless headset and the one of the plurality of host devices.

Advantageously, the transmitting the request to establish the piconet with the one of the plurality of host devices further comprises:
transmitting, by the universal wireless headset, the request to a first one of the plurality of the host devices; and
when the first one of the plurality of host devices does not provide the response within the timeout period, transmitting, by the universal wireless headset, the request to a second one of the plurality of host devices.

Advantageously, the establishing a logical connection between the one of the plurality of host devices and the at least one of the plurality of devices further comprises:
determining, by an administrative controller of the network, whether the one of the plurality of host devices is registered with the network; and
when the one of the plurality of host devices is not registered with the network, establishing a piconet between the one of the plurality of host devices with another one of the plurality of devices coupled to the network.

Advantageously, the method further comprises:
identifying the another one of the plurality of devices coupled to the network based on a table look up that correlates the another one of the plurality of devices with the one of the plurality of host devices.

According to another aspect of the invention, a method for supporting a universal wireless headset comprises:
monitoring signal strength of communications within a piconet that includes the universal wireless headset and a device coupled to a network;
when the signal strength compares unfavorably to a signal strength threshold, identifying another device coupled to the network; and
establishing a piconet between the universal wireless headset and the another device coupled to the network.

Advantageously, the identifying the another device coupled to the network further comprises:
periodically establishing, by the universal wireless headset, a piconet with devices in range of the universal wireless headset;
providing, by each of the devices in the periodically created piconet, an indication of the piconet to an administrative controller of the network; and
storing, by the administrative controller, in the table identity of the each of the devices in the periodically created piconet to indicate the location of the universal wireless device.

Advantageously, the identifying the another device coupled to the network further comprises:
providing a request for establishing a piconet between one of the devices identified in the table and the universal wireless headset to the universal wireless headset by the one of the devices;
when the universal wireless headset does not provide a response to the request within a timeout period, providing another request from another one of the devices to the universal wireless headset to establish a piconet between the universal wireless headset and the another one of the devices; and
when the universal wireless headset provides a response to the another request within the timeout period, identifying the another one of the devices as the another device.

According to another aspect of the invention, an apparatus for supporting a universal wireless headset comprises:
processing module; and
memory operably coupled to the processing module, wherein the memory stores operational instructions that cause the processing module to:
   determine whether a piconet can be established between an initiating device and the universal wireless headset for an incoming communication;
   when the piconet cannot be established, determine whether the universal wireless headset can establish a piconet with a device coupled to a network;
   when the universal wireless headset can establish the piconet with the device coupled to a network, establish the piconet between the universal wireless headset and the device coupled to the network; and
   establish a logical connection between the initiating device and the device coupled to the network via the network, wherein the incoming communication between the universal wireless headset is supported via the logical connection and the piconet between the universal wireless headset and the device coupled to the network.

Advantageously, the memory further comprises operational instructions that cause the processing module to determine whether a piconet can be established between an initiating device and the universal wireless headset:
providing, as the initiating device, a request to establish the piconet to the universal wireless headset;
determining, as the initiating device, whether a response to the request is received within a timeout period; and
when the response is not received within the timeout period, providing, as the initiating device, an indication that the piconet cannot be established to an administrative controller of the network.

Advantageously, the memory further comprises operational instructions that cause the processing module to:
when the response is received within the timeout period, establish the piconet.

Advantageously, the memory further comprises operational instructions that cause the processing module to determine whether the universal wireless headset can establish a piconet with the device coupled to the network by:
identifying, as an administrative controller of the network, the universal wireless headset based on identity of the initiating device; and
determining, as the administrative controller, location of the universal wireless headset with respect to the network.

Advantageously, the memory further comprises operational instructions that cause the processing module to determine the location of the universal wireless headset by:
accessing a table to determine the location.

Advantageously, the memory further comprises operational instructions that cause the processing module to:
periodically establish, as the universal wireless headset, a piconet with devices in range of the universal wireless headset;
provide, as each of the devices in the periodically created piconet, an indication of the piconet to the administrative controller; and
store, as the administrative controller, in the table identity of the each of the devices in the periodically created piconet to indicate the location of the universal wireless device.

Advantageously, the memory further comprises operational instructions that cause the processing module to determine whether the universal wireless headset can establish a piconet with a device coupled to a network by:
providing, as an administrative controller of the network, a message instructing the device coupled to the network to function as a master for establishing the piconet with the universal wireless headset;
providing, as the device coupled to the network, a request to the universal wireless headset;
when a response is received within a timeout period from the universal wireless headset, providing, as the device coupled to the network, a message indicating that the piconet can be established.

Advantageously, the memory further comprises operational instructions that cause the processing module to establish the piconet between the universal wireless headset and the device coupled to the network by:
establishing the piconet in accordance with the request and the response.

According to another aspect of the invention, an apparatus for supporting a universal wireless headset comprises:
processing module; and
memory operably coupled to the processing module, wherein the memory includes operational instructions that cause the processing module to:
   transmit, as the universal wireless headset, a request to establish a piconet to one of a plurality of host devices;
   when none of the plurality of host devices provides a response to the request within a timeout period, transmit, as the universal wireless headset a request to establish a piconet to one of a plurality of devices coupled to a network;
   when at least one of the plurality of devices coupled to the network provides the response within the timeout period, establish the piconet between the universal wireless headset and the at least one of the plurality of devices; and
   establish a logical connection between the one of the plurality of host devices and the at least one of the plurality of devices to support an outgoing communication from the universal wireless headset via the logical connection and the one of the plurality of host devices.

Advantageously, the memory further comprises operational instructions that cause the processing module to:
when one of the plurality of host devices provides a response to the request within a timeout period, establish the piconet between the universal wireless headset and the one of the plurality of host devices.

Advantageously, the memory further comprises operational instructions that cause the processing module to transmit the request to establish the piconet with the one of the plurality of host devices by:
transmitting, as the universal wireless headset, the request to a first one of the plurality of the host devices; and
when the first one of the plurality of host devices does not provide the response within the timeout period, transmitting, as the universal wireless headset, the request to a second one of the plurality of host devices.

Advantageously, the memory further comprises operational instructions that cause the processing module to establish a logical connection between the one of the plurality of host devices and the at least one of the plurality of devices by:
determining, as an administrative controller of the network, whether the one of the plurality of host devices is registered with the network; and
when the one of the plurality of host devices is not registered with the network, establishing a piconet between the one of the plurality of host devices with another one of the plurality of devices coupled to the network.

Advantageously, the memory further comprises operational instructions that cause the processing module to:
identify the another one of the plurality of devices coupled to the network based on a table look up that correlates the another one of the plurality of devices with the one of the plurality of host devices.

According to another aspect of the invention, an apparatus for supporting a universal wireless headset comprises:
processing module; and
memory operably coupled to the processing module, wherein the memory includes operational instructions that cause the processing module to:
   monitor signal strength of communications with a piconet that includes the universal wireless headset and a device coupled to a network;
   when the signal strength compares unfavorably to a signal strength threshold, identify another device coupled to the network; and
   establish a piconet between the universal wireless headset and the another device coupled to the network.

Advantageously, the memory further comprises operational instructions that cause the processing module to identify the another device coupled to the network by:
periodically establishing, as the universal wireless headset, a piconet with devices in range of the universal wireless headset;
providing, as each of the devices in the periodically created piconet, an indication of the piconet to an administrative controller of the network; and
storing, as the administrative controller, in the table identity of the each of the devices in the periodically created piconet to indicate the location of the universal wireless device.

Advantageously, the memory further comprises operational instructions that cause the processing module to identify the another device coupled to the network by:
providing a request for establishing a piconet between one of the devices identified in the table and the universal wireless headset to the universal wireless headset by the one of the devices;
when the universal wireless headset does not provide a response to the request within a timeout period, providing another request from another one of the devices to the universal wireless headset to establish a piconet between the universal wireless headset and the another one of the devices; and
when the universal wireless headset provides a response to the another request within the timeout period, identifying the another one of the devices as the another device.

### BRIEF DESCRIPTION OF THE SEVERAL VIEWS OF THE DRAWINGS

Figure 1 is a schematic block diagram of a wireless geographic area coupled to a wireless local area network in accordance with the present invention;
Figure 2 is a schematic block diagram of a local area network that includes a host site in accordance with the present invention;
Figure 3 is a schematic block diagram of a local area network supporting an incoming communication in accordance with the present invention;
Figure 4 is a schematic block diagram of a local area network supporting an outgoing communication in accordance with the present invention;
Figure 5 is a schematic block diagram of a local area network supporting roaming of the headset in accordance with the present invention;
Figure 6 is a logic diagram of a method for supporting a universal wireless headset in accordance with the present invention;
Figure 7 is a logic diagram of an alternate method for supporting a universal wireless headset in accordance with the present invention; and
Figure 8 is a logic diagram of yet another method for supporting a universal wireless headset in accordance with the present invention.

### DETAILED DESCRIPTION OF THE INVENTION

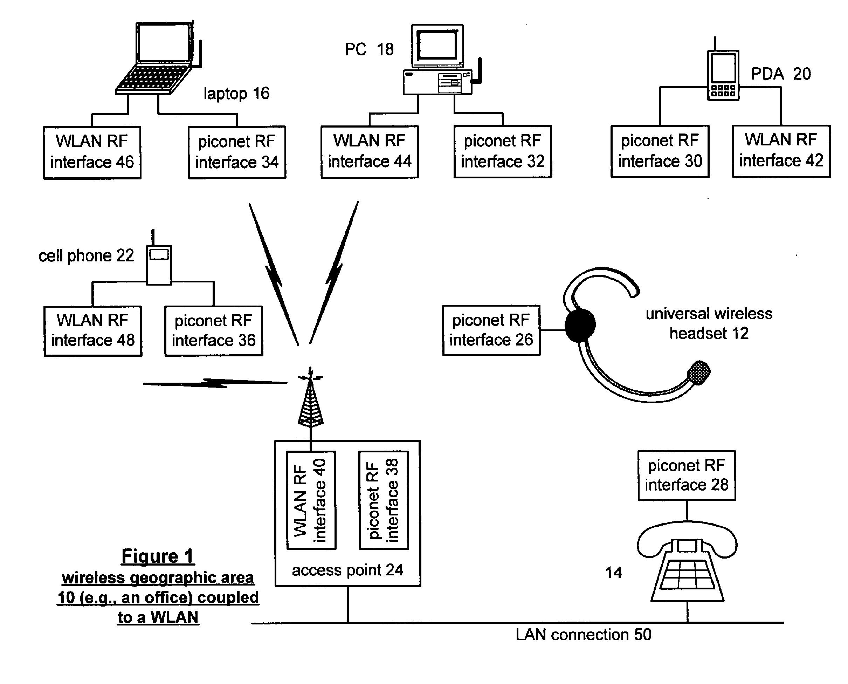

Figure 1 is a schematic block diagram of a wireless geographic area 10 that is coupled to a wireless local area network (WLAN). The wireless geographic area 10, which may correspond to an office, multiple offices, or any other limited space area, includes a local area network connection 50 and an access point 24 to provide wireless coupling to the local area network. Within the wireless geographic area 10, a plurality of devices 14-22 may be included as well as a universal wireless headset 12. The devices 14-22 may include a wire line telephone 14, a laptop computer 16, a personal computer (PC) 18, a personal digital assistant (PDA) 20, and a cellular telephone 22. The telephone 14 may be a standard cordless telephone or an Internet packet (IP) based telephone.

The universal wireless headset 12 includes an earpiece, microphone, input module (e.g., keypad), and an associated piconet radio frequency (RF) interface 26. In one embodiment, the headset 12 may be constructed in accordance with co-pending patent application entitled "MODULAR WIRELESS HEADSET" having an attorney docket number of BP 2755. The piconet RF interface 26 may be constructed in accordance with one or more versions of the Bluetooth specification. Accordingly, the piconet RF interface 26 includes a radio frequency transmitter that operates at 2.4 gigahertz and associated baseband processing to modulate and demodulate data and/or voice in accordance with one or more versions of the Bluetooth specification and/or other point-to-point wireless communication protocol. Typically, via the corresponding piconet RF interfaces, a synchronous connection orientated (SCO) link will be established between the headset 12 and one of the devices 14 - 22 and/or with the access point 24 to create the piconet.

As such, each of the devices 14-22 also includes a piconet RF interface 28-36. The piconet RF interface 28-36 may be constructed to support one or more versions of the Bluetooth specification. As such, each of the piconet RF interfaces 28-36 include a radio frequency transceiver that operates at 2.4 gigahertz and baseband processing for modulating and demodulating data that is transceived within a piconet. As such, the universal wireless headset 12 may be in a piconet with any one of the devices 14-22 and act as the headset therefore.

Devices 16-22 may further include a wireless LAN (WLAN) RF interface 42-48. The wireless LAN RF interfaces 42-48 may be constructed in accordance with one or more versions of IEEE802.11 (a), (b), and/or (g) or other WLAN protocol. Accordingly, each of the wireless LAN RF interfaces 42-48 include an RF transceiver that operates in the 2.4 gigahertz range and/or in the 5.25 or 5.75 gigahertz range and further includes baseband processing to modulate and demodulate data that is transceived over the corresponding wireless communication link.

Contrasting the functionality of the piconet RF interfaces with the wireless LAN RF interfaces, the piconet RF interfaces allow point-to-point communication between the associated devices, while the wireless LAN RF interfaces enable the associated devices to communicate indirectly via the access point 24. For example, via piconet RF interface 34 and piconet RF interface 36, laptop 16 can communicate directly with cellular telephone 24. In contrast, via wireless LAN RF 46 and wireless LAN RF interface 48, laptop 16 communicates indirectly, via the access point 24, with cellular telephone 22. In general, the coverage area of a piconet is significantly smaller than the coverage area of a wireless LAN. Thus, for example, if laptop 16 and cellular telephone 22 were unable to establish a piconet connection via piconet RF interfaces 34 and 36 due to distance between the devices, they would be able to establish a wireless communication link via the wireless LAN RF interfaces 46 and 48 and access point 24.

The universal wireless headset 12 may establish a piconet with any one of the devices 14-22 or with access point 24, which includes a wireless LAN RF interface 40 and a piconet RF interface 38. As such, the universal wireless headset 12 may function as the headset for the wire line telephone 14, the personal digital assistant 20, the personal computer 18, the laptop computer 16 and/or the cellular telephone 22 provided a piconet can be established with the device. In accordance with the present invention, if a piconet cannot be established with the particular device, an extended network may be created utilizing the wireless LAN connectivity and at least one corresponding piconet.

For example, if a communication is to be processed via the wire line telephone 14 (i.e., the host device for this example), but the headset 12 is at a distance such that a piconet cannot be established between their piconet RF interfaces 26 and 28. However, for example, the headset 12 is in a range to establish a piconet with cellular telephone 22. In this instance, the piconet RF interfaces 26 and 36 of the cellular telephone 22 and the headset 12 would establish a piconet, which may be established in accordance with the Bluetooth specification. With this piconet established, the cellular telephone 22, via its wireless LAN RF interface 48, establishes a wireless connection with access point 24. Access point 24 then establishes a communication link with the wire line telephone 14. Thus, a logical connection is established between the universal wireless headset 12 and the wire line telephone 14 via the cellular telephone 22 and access point 24. Note that the wire line telephone 14 may be directly coupled to the local area network connection 50 or coupled to a private branch exchange, which in turn is coupled to access point 24. Accordingly, within the wireless geographic area 10, the range of the universal wireless headset 12 may be extended utilizing the wireless local area network within the geographic area. As such, the universal headset of the present invention extends the mobility of its user, extends the range of headset use and expands on headset functionality.

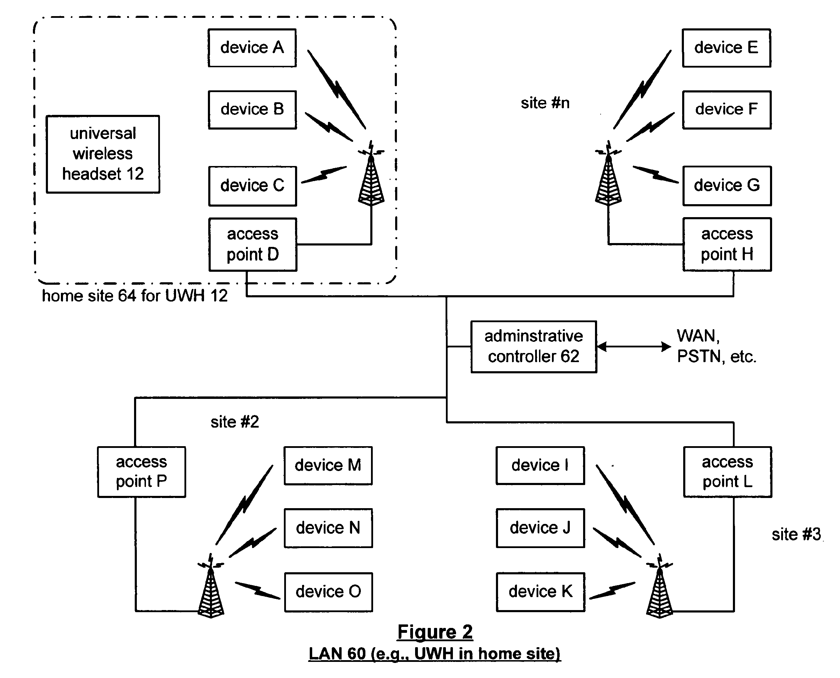

Figure 2 is a schematic block diagram of a local area network 60 that includes a plurality of sites (site #2 - #n and home site 64). In this illustration, each site includes an access point D, H, P, and L, wherein the coverage area of the access point D, H, P, or L establishes the corresponding site boundaries. In addition, each site includes a plurality of devices. The devices may be one or more of the devices illustrated in Figure 1, which include, but are not limited to, wire line telephones 14, personal digital assistants 20, personal computers 18, laptop 16 and cellular telephones 22. The number of devices in each site may range from a single device to any number of devices. In this illustration, each site includes 3 devices. As shown, site 2 includes devices M, N, O, site 3 includes devices I, J, K, site 4 includes devices E, F, G and home site 64 includes devices A, B and C.

Each of the access points D, H, P and L are coupled via a local area network connection to an administrative controller 62. The administrative controller provides the interconnectivity of the access points to create the local area network 60 and also provide coupling to other networks including wide area networks (WAN), the Internet, the public switch telephone network (PSTN), et cetera.

Home site 64 is illustrated to be the home site for the universal wireless headset 12. For example, if the universal wireless headset 12 belongs to a particular individual, the home site 64 may correspond to this individual's office and immediate surrounding area. For example, device A may correspond to the individual's cellular telephone, device B may be the individual's personal computer and device C may be the individuals wire line telephone. The affiliation of the universal wireless headset to the individual, the individual to the home site 64 and the affiliation of devices A, B and C to the individual are recorded in tables by the administrative controller 62. The administrative controller also maintains tables that affiliate devices E, F and G with site N via access point H, devices M, N, O with site 2 via access point P and devices I, J, K with site 3 via access point L. Accordingly, the administrative controller 62 maintains topographical information of the local area network 60. In addition, the administrative controller 62 maintains a table which identifies each device and/or access point that the universal wireless headset 12 could establish a piconet with. This last point will be subsequently discussed in greater detail.

As long as the universal wireless headset 12 remains within the home site 64, it may function as the wireless headset 12 for devices A, B or C as discussed with reference to Figure 1. The coordination of functioning as the wireless headset for devices A, B or C within the home site 64 may be controlled by access point D, the headset 12, a master host device (e.g., the wire line telephone), and/or by the administrative controller 62. For example, while the universal wireless headset 12 is within home site 64 and an incoming call is received via device C, device C would attempt to establish a piconet with the universal wireless headset 12. If a piconet could not be established, device C would communicate with the administrative controller 62 via the access point D to initiate an extended range use of the universal wireless headset 12. In response to the notice from device C, the administrative controller 62 would determine which of the other devices within home site 64 the universal wireless headset 12 could establish a piconet with. If, for example, the administrative controller 62 determines that device A could establish a piconet with the universal wireless headset 12, the administrative controller 62 provides a command to device A via the access point D, which instructs device A to establish the piconet with headset 12. In addition, the administrative controller provides a request to devices A and C to establish a wireless connection via access point D. Once the piconet is established between device A and headset 12 and a wireless connection is established between devices A and C through access point D, headset 12 may function as the headset for device C.

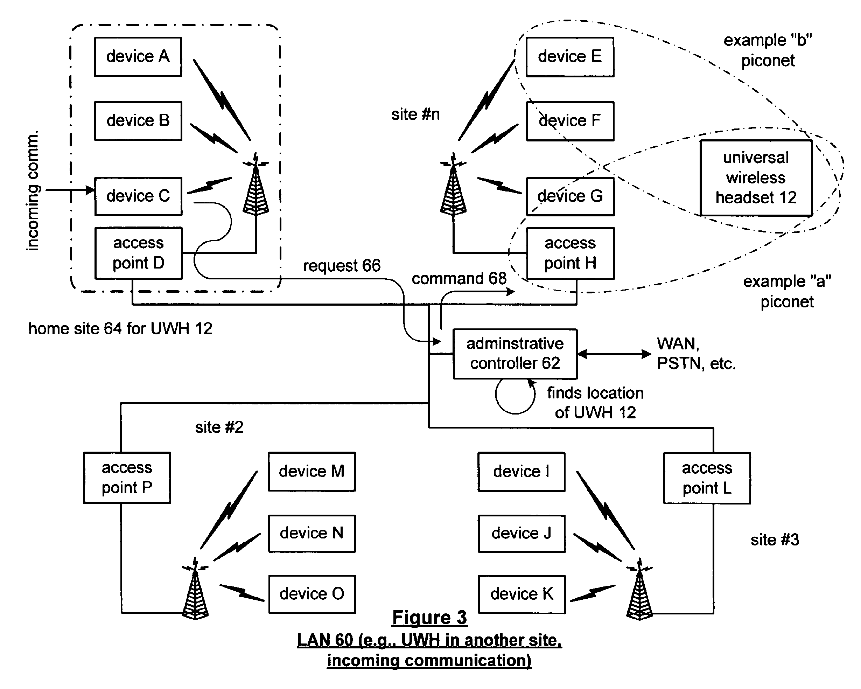

Figure 3 is a schematic block diagram of local area network 60 in which the universal wireless headset 12 is located in another site, i.e., not in its home site. In this example, device C of home site 64 is receiving an incoming communication. Upon receiving the incoming communication, device C attempts to establish a piconet with the universal wireless headset 12. Since headset 12 is outside of the range of the home site, the piconet fails. Upon determining that the piconet has failed, device C provides a request 66 to the administrative controller 62 to establish a link with the universal wireless headset 12.

Upon receiving the request 66, the administrative controller 62 determines the location of the universal wireless headset 12. This may be done by accessing a table that includes a listing of each device and access point that the universal wireless headset 12 may establish a piconet with. In addition, the administrative controller 12 may access a table that identifies the particular site location of the devices with which the universal wireless headset 12 may form a piconet with. Note that the population of the table that indicates which devices and/or access points the universal wireless headset 12 may form piconets with may be done periodically by having the universal wireless headset establishes test piconets. In response to forming a test piconet with the headset 12, the corresponding device and/or access point provides a message to the administrative controller 62 indicating that it has formed a test piconet with the headset. In response to this message, the administrative controller updates the table corresponding to the possible piconets of the headset.

In this example, the administrative controller 62 determines that the universal wireless headset 12 is in site #n. Accordingly, the administrative controller 62 sends a command 68 to access point H, wherein the command 68 corresponds to a request to establish a piconet with the wireless headset 12. The command will also identify the particular device or access point that is to establish the piconet. In this illustration, two example piconets are provided. If, a piconet can be directly established between the headset 12 and the access point H, the command 68 requests that access point H establish the piconet. Once the piconet is established, the administrative controller 62 coordinates the generation of a link between access point H and access point D and instructs access point D to establish a wireless connection with device C. Once this logical connection between device C and access point H is established, the universal wireless headset 12 may function as the wireless headset for device C even though it is some distance from device C.

If the administrative controller 62 determines that device E is to establish the piconet with the universal wireless headset 12, the command 68 indicates such a request. The access point H receives command 68 and provides it via the transmit tower to device E. Upon receiving the command 68, device E establishes the piconet with the wireless headset 12. In addition, command 68 also requests that access point H establish a wireless connection with device E. Once this connection is in place in site n, the administrative controller 62 establishes a logical connection between access point H and access point D. Further, access point D is instructed to establish a wireless connection with device C. Once this is complete, the universal wireless headset 12 may function as the headset for device C.

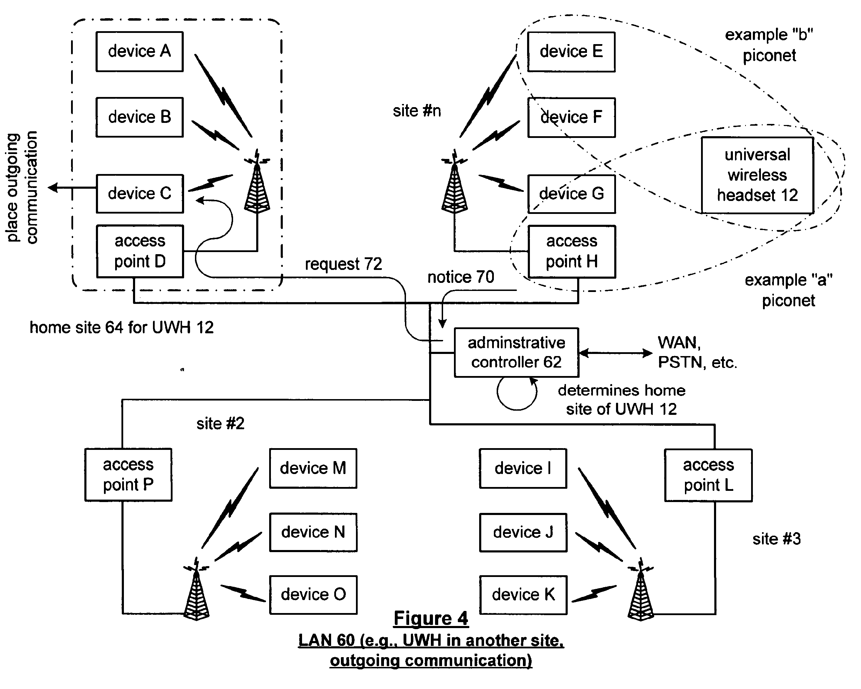

Figure 4 is a schematic block diagram of local area network 60 where the universal wireless headset 12 is in another site. In this example, an outgoing communication is being initiated via the universal wireless headset 12. In this example, the user of the universal wireless headset 12 initiates an outgoing communication request. In response to the outgoing communication request, the universal headset 12 attempts to establish a piconet with ones of its host devices. The particular host device the headset first attempts to establish the piconet with may be arbitrarily established via a list contained within the headset 12, where the list is prioritized by the user or by default. For instance, the list may prioritize the wire line telephone, over the PC, over the cellular telephone, et cetera. As such, the headset 12 will first attempt to establish a piconet with the first host device in the list, when that fails, the headset 12 will attempt to establish a piconet with each device in the list in sequential order. When the headset 12 fails to establish a piconet with any of its host devices, it then attempts to establish a piconet with a device, or access point, within its range. Accordingly, when the universal wireless headset 12 generates its test piconets to indicate which devices it can affiliate with, it too stores this information. Alternatively, the headset 12 may access its list of viable piconets, i.e., the devices it can establish piconets with, and, if a host device is not included in the list, it automatically attempts to establish a piconet with a non-host device.

If the headset 12 can establish a piconet with access point H, it does so. If, however, the headset 12 cannot establish a piconet with access point H, it establishes a piconet with one of the devices affiliated with the access point H. Once the piconet is established, in this example with device E, the headset 12 provides a notice 70 regarding the outgoing communication. Device E provides the notice to access point H via a wireless connection between device E and device H where access point H routes the notice 70 to the administrative controller 62. The notice 70 includes the identification of the universal wireless headset 12, access point H and may further include identity of device E, if device E is involved in the communication.

The administrative controller 62, based on the content of notice 70, determines the home site of the universal wireless headset 12. In addition to determining the home site, the administrative controller 62 determines the preferred device within the home site for supporting the outgoing communication. Accordingly, the administrative controller 62 includes a user define list, system define list, or default list that prioritizes the use of the devices and home site 64 for supporting outgoing communications.

Having determined the home site and appropriate host device, the administrative controller 62 provides a request 72 to access point D of home site 64 to establish a wireless communication link with the host device. In this example, the host device has been selected to be device C. Once a logical connection between device E and device C has been established via access points H and D, the outgoing communication is placed and the universal wireless headset 12 functions as the headset for device C regarding the outgoing communication and subsequent ongoing communication. As one of average skill in the art will appreciate, if device C is directly connected to the local area network, the request 72 may be directly provided to device C.

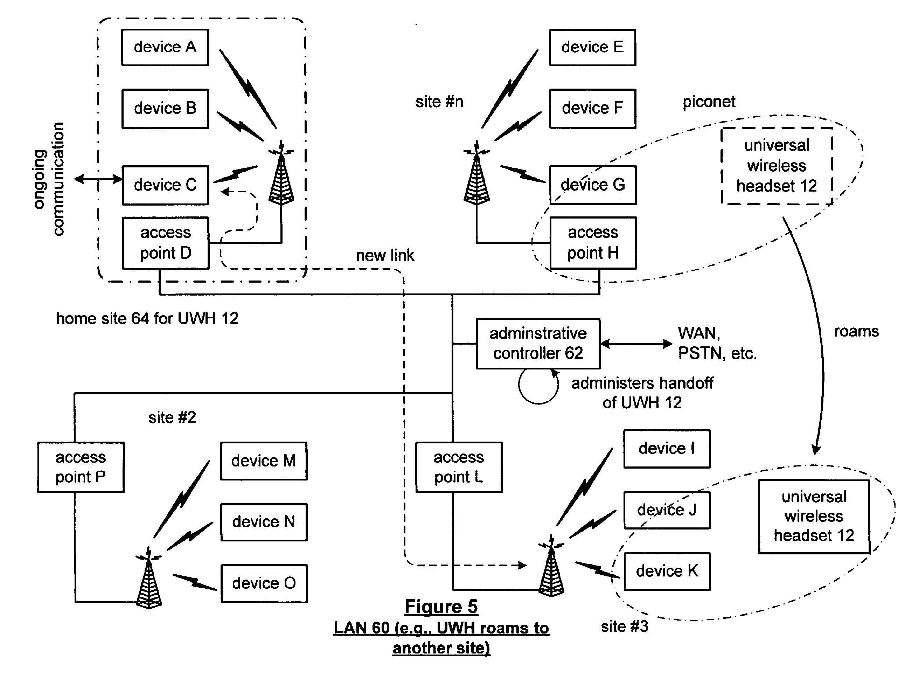

Figure 5 is a schematic diagram of local area network where the universal wireless headset 12 roams from one site to another while a communication is ongoing. As shown, for a first portion of the ongoing communication, the universal wireless headset 12 has a piconet established with access point H. Access point H in turn, has a logical connection with device C to support the ongoing communication. However, over time, the universal wireless headset 12, i.e., the user thereof, may roam from site n to, for example site 3. Eventually, the ongoing communication will be handed off from access point H to either access point L or, as shown, device K in site 3.

The determination of when to handoff an ongoing communication may be based on the signal strength of wireless communications within the currently established piconet. Accordingly, the wireless headset 12 may monitor the signal strength of signals received from access point H. In addition to or alternatively, access point H may monitor the signal strengths of signals received from wireless headset 12. When the signal strength drops below a desired threshold (e.g., -80 to -85dB), the administrative controller determines that the ongoing communication needs to be handed off. Having made this determination, the administrative controller 62 then determines, from the corresponding tables, which device, or access point, to hand the communication off to. In this example, it will determine that device K is to facilitate the ongoing communication. In this instance, prior to ending the piconet with access point H, the universal wireless headset 12 establishes a piconet with device K. With the piconet established with device K, and/or simultaneously with the establishment of the piconet, the administrative controller 62 establishes a new link between device K and device C. Once the new link and new piconet are established, the communication is switched to the new link and new piconet and the old link and old piconet are deactivated.

In an alternate example, while not shown in Figure 5, the handoff may occur from one device, or access point to another within the same site. For example, assume that the universal wireless headset 12 has a piconet established with access point H. As the signal strength of the signals transmitted there between decreases to a point where a handoff is needed, the administrative controller 62 may determine that a handoff to device E, F or G may be appropriate. In this instance, a piconet would be established with the appropriate device within the same site and a wireless connection between that device and access point H would be generated. Once these new connections are in place, the ongoing communication would be transferred thereto.

As yet another example, handoff may occur when the wireless headset and corresponding device were initially out of range of the local area network 60 and come into range. For example, if a user is engaged in a cellular telephone call on his or her way to the office, the cellular telephone and hence the wireless headset 12 may be out of range of the local area network. When the user arrives at the office, the cellular telephone communication may be transferred, via a call transfer request provided back to the central office, to a wire line telephone connection. In addition to establishing the call transfer from the cellular system to the wire line system, the wireless headset may be transferred from the cellular telephone to the wire line telephone. Once the backend transfer has occurred, i.e., the transfer from the cellular system to the wire line system, at the central office and the piconet is established between the headset and the wire line telephone, the call is handed off to device C and the ongoing communication continues.

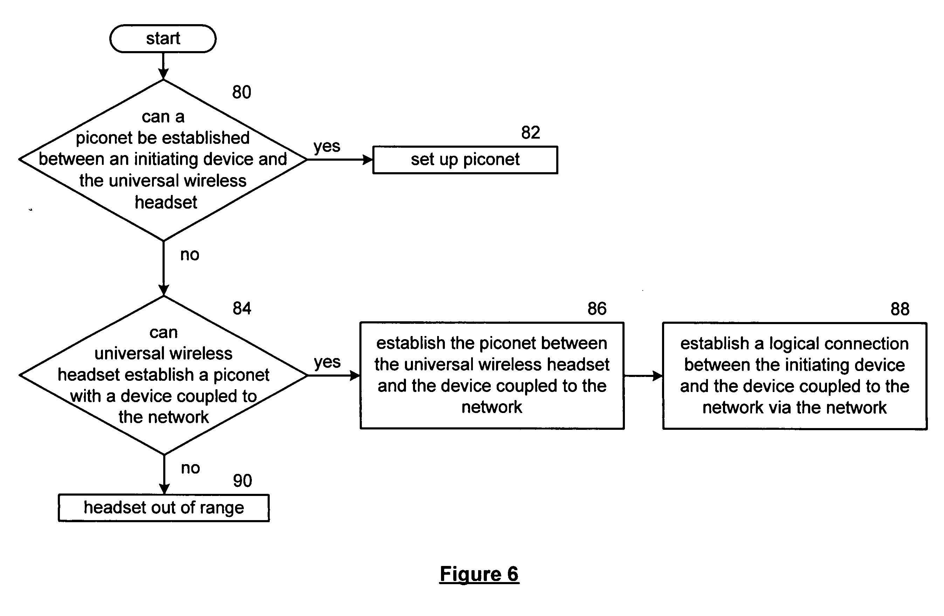

Figure 6 is a logic diagram of a method for supporting a universal wireless headset. The method begins at Step 80 where a determination is made as to whether a piconet can be established between an initiating device and the universal wireless headset for an incoming communication. The establishment of a piconet may be done in accordance with the Bluetooth specification where the initiating device provides a request to establish the piconet to the headset or some other point-to-point wireless communication protocol. If the headset does not respond within a timeout period, the piconet is not established. If, however, the piconet can be established, i.e., the headset responded within the timeout period, the process proceeds to Step 82 where the piconet is established and the headset functions as the audio input and output for the initiating device.

If, however, the piconet cannot be established, the process proceeds to Step 84 where a determination is made as to whether the headset can establish a piconet with any device coupled to the network. To initiate this determination, the initiating device provides an indication to the administrative controller of the network that it desires to form a connection with its headset. The administrative controller then may identify the particular universal wireless headset based on the identity of the initiating device, e.g., through a table lookup, and then determines the particular location of the headset, e.g., via another table lookup. As discussed with reference to Figures 1-5, the administrative controller may maintain tables that identify which devices of the network the headset may establish piconets with to determine the headsets location. Such information is periodically updated to maintain accurate tracking of the headset's location.

If it is determined that a piconet cannot be established between a device coupled to the network and the headset, the process proceeds to Step 90 where it is determined that the headset is out of range.

If, however, a piconet can be established, the process proceeds to Step 86 where the piconet between the universal wireless headset and the device coupled to the network is established. This may be done as previously described with reference to Figures 1-5. The process then proceeds to Step 88 where a logical connection between the initiating device and the device coupled to the network is established. This may be done as previously described with reference to Figures 1-5.

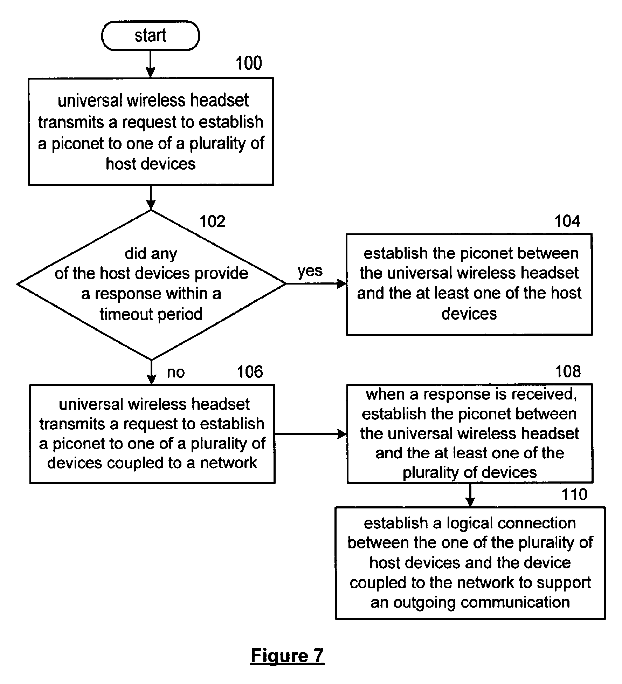

Figure 7 is a logic diagram of another method for supporting a universal wireless headset. The process begins at Step 100 where a universal wireless headset transmits a request to establish a piconet to one of a plurality of host devices to establish an outgoing communication. This may be done in accordance with one or more versions of the Bluetooth specification wherein the headset determines whether one of the host devices has provided a response to the request within a timeout period. If not, the headset then attempts to establish a piconet with another one of the host devices. The process then proceeds to Step 102 where a determination is made as to whether any of the host devices provided a response within the timeout period. If so, the process proceeds to Step 104 where a piconet is established between the universal wireless headset and one of the host devices. With the piconet in place, the headset functions as the wireless headset for the host device.

If, however, at Step 102 none of the host devices provided a response within a timeout period, the process proceeds to Step 106. At Step 106 the universal wireless headset transmits a request to establish a piconet with one of a plurality of devices coupled to the network. This was previously described with reference to Figures 1-5. The process then proceeds to Step 108 where, when a response is received, the piconet between the universal wireless headset and the device coupled to the network is established. The process then proceeds to Step 110 where a logical connection is established between one of the host devices and the device coupled to the network to support the ongoing communication. This was also illustrated and described with reference to Figures 1-5.

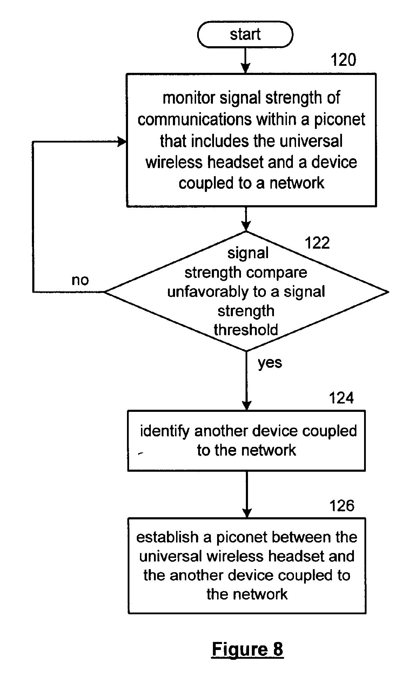

Figure 8 is a logic diagram of another method for supporting a universal wireless headset. The method begins at Step 120 where signal strength of communications in a piconet are monitored. The piconet includes the universal wireless headset and a device coupled to the network. The process then proceeds to Step 122 where a determination is made as to whether the signal strength compares unfavorably to a signal strength threshold (e.g., is below a threshold of -80 to -85dB). If not, the process continues to loop at Steps 120 and 122.

If, however, the signal strength compares unfavorably, the process proceeds to Step 124 where another device coupled to the network is identified. The process then proceeds to Step 126 where a new piconet is established between the universal wireless headset 12 and the another device coupled to the network. This enables the universal wireless headset to roam within the local area network and maintain its wireless headset functionality with one of its host devices as it roams. A graphic example of this was provided with reference to Figure 5.

The preceding discussion has presented a method and apparatus for supporting a universal wireless headset. With such support, a wireless headset in accordance with the present invention extends the range of the user's mobility, extends the range of the headset and enhances the functionality of the headset. As one of average skill in the art will appreciate, other embodiments of the present invention may be derived from the teaching of the present invention without deviating from the scope of the claims.

## Claims

1. A method for supporting a universal wireless headset, the method comprises:
determining whether a piconet can be established between an initiating device and the universal wireless headset for an incoming communication;
when the piconet cannot be established, determining whether the universal wireless headset can establish a piconet with a device coupled to a network;
when the universal wireless headset can establish the piconet with the device coupled to a network, establishing the piconet between the universal wireless headset and the device coupled to the network; and
establishing a logical connection between the initiating device and the device coupled to the network via the network, wherein the incoming communication between the universal wireless headset is supported via the logical connection and the piconet between the universal wireless headset and the device coupled to the network.

2. The method of claim 1, wherein the determining whether a piconet can be established between an initiating device and the universal wireless headset further comprises:
providing, by the initiating device, a request to establish the piconet to the universal wireless headset;
determining, by the initiating device, whether a response to the request is received within a timeout period; and
when the response is not received within the timeout period, providing, by the initiating device, an indication that the piconet cannot be established to an administrative controller of the network.

3. The method of claim 2 further comprises:
when the response is received within the timeout period, establishing the piconet.

4. A method for supporting a universal wireless headset, the method comprises:
transmitting, by the universal wireless headset, a request to establish a piconet to one of a plurality of host devices;
when none of the plurality of host devices provides a response to the request within a timeout period, transmitting, by the universal wireless headset a request to establish a piconet to one of a plurality of devices coupled to a network;
when at least one of the plurality of devices coupled to the network provides the response within the timeout period, establishing the piconet between the universal wireless headset and the at least one of the plurality of devices; and
establishing a logical connection between the one of the plurality of host devices and the at least one of the plurality of devices to support an outgoing communication from the universal wireless headset via the logical connection and the one of the plurality of host devices.

5. The method of claim 4 further comprises:
when one of the plurality of host devices provides a response to the request within a timeout period, establishing the piconet between the universal wireless headset and the one of the plurality of host devices.

6. A method for supporting a universal wireless headset, the method comprises:
monitoring signal strength of communications within a piconet that includes the universal wireless headset and a device coupled to a network;
when the signal strength compares unfavorably to a signal strength threshold, identifying another device coupled to the network; and
establishing a piconet between the universal wireless headset and the another device coupled to the network.

7. The method of claim 6, the identifying the another device coupled to the network further comprises:
periodically establishing, by the universal wireless headset, a piconet with devices in range of the universal wireless headset;
providing, by each of the devices in the periodically created piconet, an indication of the piconet to an administrative controller of the network; and
storing, by the administrative controller, in the table identity of the each of the devices in the periodically created piconet to indicate the location of the universal wireless device.

8. An apparatus for supporting a universal wireless headset, the apparatus comprises:
processing module; and
memory operably coupled to the processing module, wherein the memory stores operational instructions that cause the processing module to:
determine whether a piconet can be established between an initiating device and the universal wireless headset for an incoming communication;
when the piconet cannot be established, determine whether the universal wireless headset can establish a piconet with a device coupled to a network;
when the universal wireless headset can establish the piconet with the device coupled to a network, establish the piconet between the universal wireless headset and the device coupled to the network; and
establish a logical connection between the initiating device and the device coupled to the network via the network, wherein the incoming communication between the universal wireless headset is supported via the logical connection and the piconet between the universal wireless headset and the device coupled to the network.

9. An apparatus for supporting a universal wireless headset, the apparatus comprises:
processing module; and
memory operably coupled to the processing module, wherein the memory includes operational instructions that cause the processing module to:
transmit, as the universal wireless headset, a request to establish a piconet to one of a plurality of host devices;
when none of the plurality of host devices provides a response to the request within a timeout period, transmit, as the universal wireless headset a request to establish a piconet to one of a plurality of devices coupled to a network;
when at least one of the plurality of devices coupled to the network provides the response within the timeout period, establish the piconet between the universal wireless headset and the at least one of the plurality of devices; and
establish a logical connection between the one of the plurality of host devices and the at least one of the plurality of devices to support an outgoing communication from the universal wireless headset via the logical connection and the one of the plurality of host devices.

10. An apparatus for supporting a universal wireless headset, the apparatus comprises:
processing module; and
memory operably coupled to the processing module, wherein the memory includes operational instructions that cause the processing module to:
monitor signal strength of communications with a piconet that includes the universal wireless headset and a device coupled to a network;
when the signal strength compares unfavorably to a signal strength threshold, identify another device coupled to the network; and
establish a piconet between the universal wireless headset and the another device coupled to the network.
